# EUROPÄISCHE PATENTSCHRIFT

(11) **EP 4 232 711 B1**
(45) Veröffentlichungstag und Bekanntmachung des Hinweises auf die Patenterteilung: **18.12.2024**
(21) Anmeldenummer: 21787403.1
(22) Anmeldetag: 05.10.2021
(51) Int. Cl.: F03D 80/70, F16H 57/021, F16H 57/031, F16H 57/023, F16H 57/038, F16C 19/38, F16H 57/022, F16C 35/063, F16C 35/067

(54) **GETRIEBE MIT EINEM GEHÄUSE UND EINER WELLENEINHEIT**
GEARING HAVING A HOUSING AND A SHAFT UNIT
ENGRENAGE COMPRENANT UN CARTER ET UNE UNITÉ D'ARBRE

(30) Priorität: 20.10.2020 DE 102020006453
(43) Veröffentlichungstag der Anmeldung: 30.08.2023
(73) Patentinhaber: SEW-EURODRIVE GmbH & Co. KG, 76646 Bruchsal (DE)
(72) Erfinder: SAAR, Steffen, 67376 Harthausen (DE); STRAUSS, Dietmar, 76703 Kraichtal (DE); RUPPANER, Christoph, 76703 Kraichtal (DE)
(86) Internationale Anmeldenummer: PCT/EP2021/077462
(87) Internationale Veröffentlichungsnummer: WO 2022/084030

(56) Entgegenhaltungen:
- CN-A- 106 321 740
- CN-Y- 201 225 284
- DE-A1- 102004 024 003
- US-A- 2 605 148

## Beschreibung

Die Erfindung betrifft ein Getriebe mit einem Gehäuse und einer Welleneinheit.

Es ist allgemein bekannt, dass ein Getriebe ein Gehäuse aufweist, in welchem die Lager einer Welle des Getriebes aufgenommen sind.

**Aus der** DE 10 2004 024003 A1 **ist als als nächstliegender Stand der Technik eine Lagerung für eine Antriebsritzelwelle bekannt.**

Aus der DE 10 2013 226 519 A1 ist eine Wellen-Lager-Baugruppe für ein Windkraftgetriebe bekannt.

Aus der DE 10 2007 058 904 A1 ist ein Getriebe bekannt.

Aus der DE 10 2015 200 741 A1 ist ein Verfahren zur Einstellung eines Verdrehspiels eines Getriebes bekannt.

Aus der DE 10 2010 021 725 A1 ist ein Wälzlager bekannt.

Aus der CN 2 01 225 284 Y ist eine Lageranordnung bekannt.

Aus der DE 23 38 175 A ist eine Vorrichtung an Schraubenverdichtern bekannt.

Aus der CN 2 01 133 351 Y ist eine Lageranordnung bekannt.

Aus der US 2 605 148 A ist eine vorgespannte Lagereinheit bekannt.

Aus der JP 2000- 74 051 A ist eine Lagervorrichtung bekannt.

**Aus der** CN 106 321 740 A **ist ein Getriebe mit Lageranordnungen bekannt.**

Der Erfindung liegt daher die Aufgabe zugrunde, ein Getriebe einfache herstellbar auszuführen.

Erfindungsgemäß wird die Aufgabe bei dem Getriebe nach den in Anspruch 1 angegebenen Merkmalen gelöst.

Wichtige Merkmale der Erfindung bei dem Getriebe mit einem Gehäuse und einer Welleneinheit sind, dass das Gehäuse ein Unterteil und ein auf das Unterteil aufgesetztes Oberteil aufweist,
wobei das Unterteil zumindest eine insbesondere halbzylindrische Aussparung, insbesondere Lageraufnahme, zur Aufnahme der Welleneinheit aufweist,
wobei das Oberteil zumindest eine zweite insbesondere halbzylindrische Aussparung, insbesondere Lageraufnahme, aufweist, die zusammen mit der insbesondere halbzylindrischen Aussparung des Unterteils eine vollständige und/oder zylindrische Lageraufnahme bildet,
wobei die Welleneinheit eine Welle aufweist, auf welche ein erstes und ein zweites Lager aufgesteckt sind, deren Außenringe gegeneinander verspannt sind, wobei die Welleneinheit eine oder mehrere erste Passscheiben zur Einstellung des Verspannens, insbesondere der Lagerspannung, aufweist,
wobei das Getriebe eine oder mehrere zweite Passscheiben aufweist zur Einstellung der axialen Position der Welleneinheit.

Von Vorteil ist dabei, dass die Lagerspannung der Lager der Welle der Welleneinheit unabhängig von der relativ auf das Ritzel bezogenen axialen Positionierung der Welleneinheit ausführbar ist. Somit ist also das Tragbild der eintreibenden Winkelgetriebestufe unabhängig von der Lagerspannung einstellbar und jede der beiden Einstellungen mittels jeweiliger Passscheiben, also ersten und zweiten Passscheiben festlegbar. Die Welleneinheit ist vorkomplettiert ausgeführt und kann somit im Lager gelagert werden.

Bei einer vorteilhaften Ausgestaltung weist die Welleneinheit ein Buchsenteil, insbesondere Hakenbuchse, auf, in welcher der Außenring des ersten Lagers und der Außenring des zweiten Lagers aufgenommen ist,
insbesondere wobei einer der Außenring des ersten Lagers gegen einen an dem Buchsenteil ausgeformten, nach radial innen hervorragenden Vorsprung angestellt ist. Von Vorteil ist dabei, dass das Buchsenteil beide Außenringe aufnimmt und mit einem nach radial innen hervorragenden Ringbereich einen ersten Anschlag bewirkt. Der zweite Anschlag wird durch die Basisringplatte bewirkt, welche mit Schrauben auf das Buchsenteil gedrückt wird und somit über zwischengeordnete Passscheiben den Abstand des Außenrings des zweiten Lagers bestimmt und dadurch die Lagerspannung einstellt.

Bei einer vorteilhaften Ausgestaltung sind der Innenring des ersten Lagers und der Innenring des zweiten Lagers auf die Welle aufgesteckt,
wobei der Innenring des ersten Lagers gegen eine Wellenstufe der Welle angestellt ist oder gegen einen an einer Wellenstufe der Welle angestellten Ring angestellt ist. Von Vorteil ist dabei, dass die Innenringe axial begrenzbar sind.

Bei einer vorteilhaften Ausgestaltung begrenzt einen in die Stirnseite der Welle eingeschraubte Rundplatte den Innenring des zweiten Lagers axial,
insbesondere wobei der Innenring des ersten Lagers axial direkt benachbart zum Innenring des zweiten Lagers benachbart ist. Von Vorteil ist dabei, dass die Innenringe axial begrenzbar sind.

Bei einer vorteilhaften Ausgestaltung ist eine Basisringplatte mittels Schrauben auf das Buchsenteil gedrückt gehalten,
wobei die Schrauben durch die Basisringplatte hindurchragen und in axial gerichtete Gewindebohrungen des Buchsenteils eingeschraubt sind. Von Vorteil ist dabei, dass mittels zwischengeordneter Passscheibe oder Passscheiben der Abstand zwischen der Basisringplatte und dem Außenring des zweiten Lagers verringerbar ist.

Bei einer vorteilhaften Ausgestaltung ist das erste Lager als Schräglager ausgeführt und das zweite Lager ist als Schräglager ausgeführt. Von Vorteil ist dabei, dass hohe Querkräfte der Winkelstufe ableitbar sind.

Bei einer vorteilhaften Ausgestaltung sind axial zwischen dem Außenring des zweiten Lagers und der Basisringplatte die erste oder die ersten Passscheiben angeordnet. Von Vorteil ist dabei, dass der Abstand und auch die Lagerspannung somit einstellbar sind mittels der Wandstärke der Passscheiben.

Bei einer vorteilhaften Ausgestaltung weist die Basisringplatte, insbesondere zum Einstellen der Lagervorspannung, axial durchgehende Gewindebohrungen für Einstellschrauben auf, insbesondere welche auf den Außenring des zweiten Lagers drücken. Von Vorteil ist dabei, dass vor dem Einbringen der Passscheiben der Abstand mittels der Einstellschrauben einstellbar ist und somit die Wandstärke der nach dem Entfernen der Einstellschrauben einzubringenden Passscheiben bestimmt ist.

Bei einer vorteilhaften Ausgestaltung weist die Basisringplatte axial durchgehende Bohrungen für eine Fühlerlehre oder für ein Tiefenmaß auf, insbesondere mit welcher der Abstand zwischen Basisringplatte und Außenring des zweiten Lagers bestimmbar ist. Von Vorteil ist dabei, dass die Beabstandung und somit die Wandstärke der einzubringenden Passscheiben einfach bestimmbar ist.

**Erfindungsgemäß** weist die Basisringplatte an ihrem äußeren Umfang radial gerichtete Aussparungen auf,
wobei eine erste der Aussparungen die Mündung einer Ölbohrung freigibt. **Bei einer vorteilhaften Ausgestaltung** in dem von der Ölbohrung überdeckten

Umfangswinkelbereich der von der Ölbohrung überdeckte Radialabstandsbereich radial beabstandet ist von dem von der basisringplatte überdeckten Radialabstandsbereich. Von Vorteil ist dabei, dass Öl dem Freiraum zwischen der Basisringplatte und dem Lagerdeckel zuführbar ist.

Bei einer vorteilhaften Ausgestaltung ist ein Rad, insbesondere Kegelrad oder planverzahntes Rad, auf die Welle aufgesteckt und gegen eine Wellenschulter angestellt,
wobei eine Distanzhülse auf der von der Wellenschulter axial abgewandten Seite von dem Ringteil gegen das Rad gedrückt ist.

insbesondere wobei die Basisringplatte den Innenring des zweiten Lagers zum Innenring des ersten Lagers hin drückt, der auf das Ringteil gedrückt ist. Von Vorteil ist dabei, dass eine Beabstandung des ersten Lagers vom Rad in einfacher Weise erreichbar ist und somit dasselbe Gehäuse für verschiedene Varianten von Getrieben verwendbar ist, insbesondere größeren eintreibenden Ritzeln, die ein Verschieben der axialen Position ermöglichen.

Bei einer vorteilhaften Ausgestaltung ist auf der vom ersten und zweiten Lager abgewandten Seite des Rads ein drittes Lager auf die Welle aufgesteckt. Von Vorteil ist dabei, dass dieses dritte Lager als Loslager, insbesondere als aus Zylinderrollenlager oder Pendelrollenlager ausgeführtes Loslager, vorsehbar ist und die anderen beiden Lager ein gemeinsames Festlager bilden. Das erste Lager und zweite Lager sind zusammen in derselben Gehäusewand des Getriebes aufnehmbar, wobei die Wandstärke dieser Gehäusewand größer als die Summe der Wandstärke des Innenrings des ersten Lagers und des Innenrings des zweiten Lagers ist.

Bei einer vorteilhaften Ausgestaltung ist in der ersten insbesondere halbzylindrischen Aussparung des Unterteils das Buchsenteil aufgenommen und/oder eingelegt
und/oder in einer weiteren insbesondere halbzylindrischen zur Aufnahme des Unterteils ist das dritte Lager der Welle aufgenommen und/oder eingelegt. Von Vorteil ist dabei, dass die Welleneinheit von oben kommen auf das Unterteil hin absenkbar ist und dort insbesondere an zwei gegenüberliegenden Gehäusewänden des Getriebes aufnehmbar sind.

Bei einer vorteilhaften Ausgestaltung ist die Basisringplatte mittels durch die Basisringplatte durchgehender, weiterer Schrauben zum Unterteil hingedrückt,
wobei eine oder mehrere zweite Passscheiben zwischen Basisringplatte und Unterteil angeordnet sind,
insbesondere wobei die Basisringplatte axial durchgehende Gewindebohrungen aufweist, durch welche Einstellschrauben hindurchragen, die auf dem unterteil abgestützt sind, und weitere axial durchgehende Bohrungen aufweist, durch welche der Abstand zwischen Basisringplatte und Unterteil mittels Fühlerlehre bestimmbar ist. Von Vorteil ist dabei, dass eine Verbindung der Basisringplatte und des Unterteils in einfacher Weise ermöglicht ist.

Bei einer vorteilhaften Ausgestaltung ist ein Lagerdeckel mittels Schrauben mit dem Unterteil dicht, insbesondere öldicht, verbunden, insbesondere zur Abdeckung der Basisringplatte,
wobei zwischen Basisring und Lagerdeckel ein Freiraum ausgebildet ist, der zumindest teilweise mit Öl befüllt ist,
insbesondere wobei der vom Lagerdeckel in axialer Richtung überdeckte Bereich den von der Basisringplatte in axialer Richtung überdeckten Bereich umfasst und/oder wobei der vom Lagerdeckel überdeckte Radialabstandsbereich den von der Basisringplatte überdeckten Radialabstandsbereich umfasst. Von Vorteil ist dabei, dass der Lagerdeckel einen ölbefüllten Freiraum abdeckt, aus welchem das zweite Lager mit Öl versorgbar ist. Hingegen ist das erste Lager aus dem Ölsumpf im Innenraumbereich des Getriebes versorgbar.

Wichtige Merkmale bei dem Verfahren zum Herstellen eines Getriebes sind, dass in einem ersten Verfahrensschritt eine vorkomplettierte Welleneinheit hergestellt wird, wobei auf eine Welle ein erstes und ein zweites Lager aufgesteckt werden und danach deren Außenringe, insbesondere mittels eines die Außenringe aufnehmenden Buchsenteils und einer Basisringplatte, gegeneinander verspannt werden unter Verwendung einer oder mehrerer erster Passscheiben zur Einstellung des Verspannens, insbesondere der Lagerspannung, wobei in einem auf den ersten Verfahrensschritt nachfolgenden zweiten Verfahrensschritt die Welleneinheit in ein Unterteil des Gehäuses des Getriebes eingelegt wird durch Einlegen einer oder mehrerer zweiter Passscheiben zwischen der Basisringplatte und dem Unterteil die auf das Unterteil bezogene relative axiale Position der Welleneinheit festgelegt wird, insbesondere wobei die Bestimmung der axialen Position durch Beurteilung des Tragbildes eines aus einem mit der Welle drehfest verbundenen Rad und aus einem drehbar im Gehäuse gelagerten Ritzel, insbesondere Kegelritzel, des Getriebes gebildeten Verzahnungspaars erfolgt.

Von Vorteil ist dabei, dass zunächst die Lagerspannung eingestellt wird und somit die Welleneinheit vorkomplettiert mit Lagerspannung ausgebildet ist. Die Lagerspannung ist unabhängig von der axialen Positionierung der Welleneinheit im Getriebe. Somit ist zum Einstellen des Tragbildes der ersten Getriebestufe keine Beeinflussung der Lagerspannung bewirkt, sondern die axiale Position ist unabhängig einstellbar von der Lagerspannung. Dies bedeutet, dass die Welleneinheit derart axial verschoben wird, bis das Tragbild die gewünschte Erscheinung hat. Bei diesem axialen Verschieben bleibt die Lagerspannung der die Welle lagernden, ein Festlager bildenden Lager, also des ersten und zweiten Lagers, unverändert. Das dritte Lager der Welle ist als Loslager zur Kompensation thermisch bedingter Ausdehnungen ausgeführt. Das erste und zweite Lager weist einen geringeren Abstand zum Rad auf als das dritte Lager.

Weitere Vorteile ergeben sich aus den Unteransprüchen.

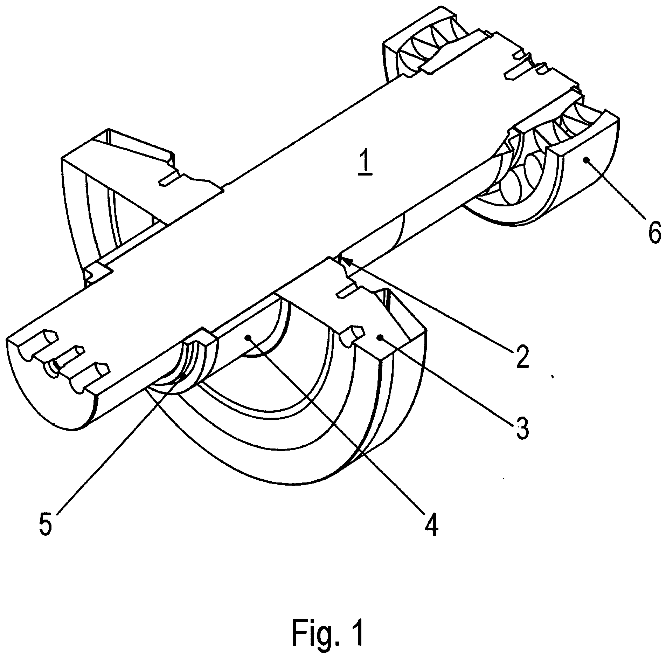

Die Erfindung wird nun anhand von schematischen Abbildungen näher erläutert: In der Figur 1 ist ein erster Verfahrensschritt zur Vormontage einer vorkomplettierten Welleneinheit dargestellt, bei welchem auf die Welle ein Rad 3, ein drittes Lager 6 und eine Distanzhülse 4 aufgesteckt wird.

In der Figur 2 ist zweiter Verfahrensschritt dargestellt, bei welchem zwei weitere Lager aufgesteckt werden, deren Außenringe (21, 23) in einem Buchsenteil 25 aufgenommen sind.

In der Figur 3 ist ein dritter Verfahrensschritt dargestellt, bei welchem eine auf das Buchsenteil 25 drückende Basisringplatte 30 an die Welle 1 angeschraubt wird.

In der Figur 4 ist eine Schrägansicht der so hergestellten vorkomplettierten Welleneinheit dargestellt.

In der Figur 5 ist die Welleneinheit angeschnitten dargestellt.

In der Figur 6 die Welleneinheit in ein Unterteil 60 des Gehäuses eines erfindungsgemäßen Getriebes eingesetzt und angeschnitten dargestellt.

In der Figur 7 ist ein angeschnittener Ausschnitt des Getriebes bei aufmontiertem Lagerdeckel 70 dargestellt.

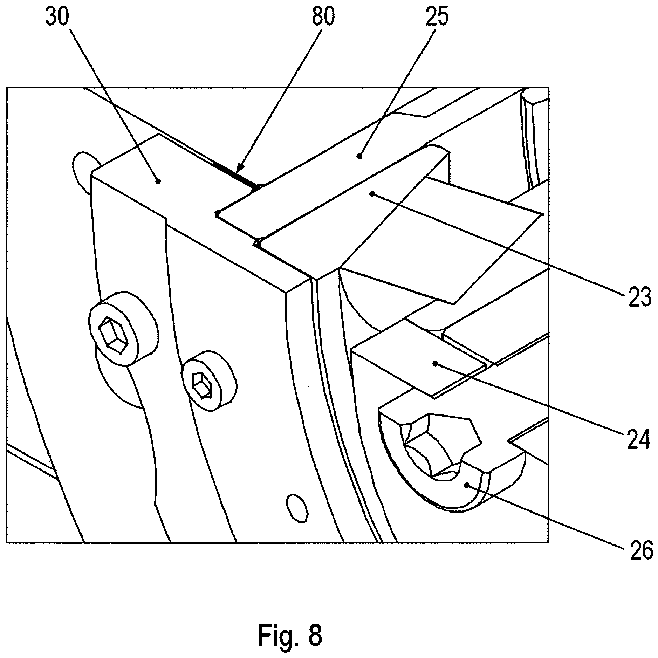

In der Figur 8 ist ein Ausschnitt der Figur 6 vergrößert dargestellt.

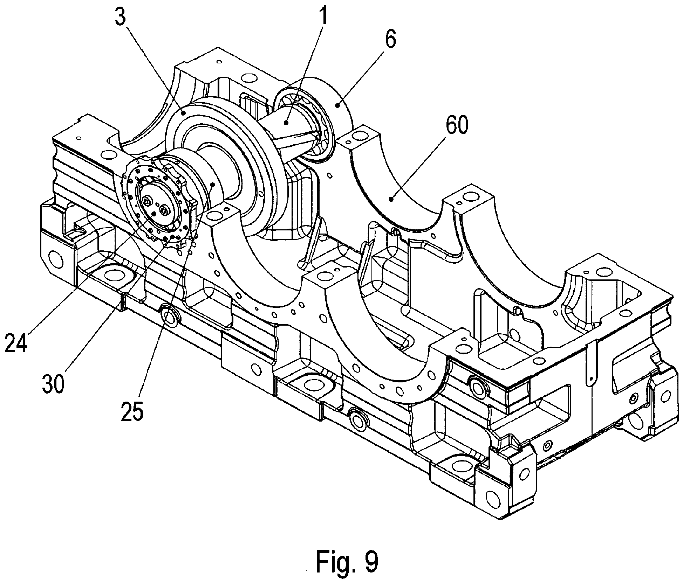

In der Figur 9 die Welleneinheit in ein Unterteil 60 des Gehäuses eines erfindungsgemäßen Getriebes eingesetzt.

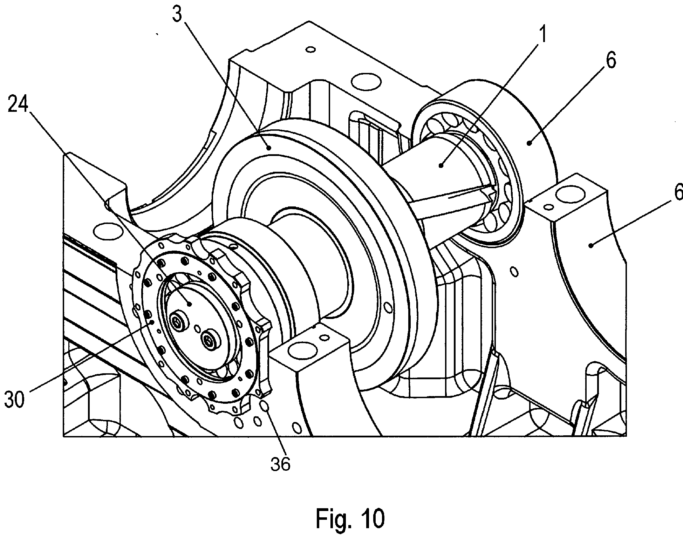

In der Figur 10 ist ein Ausschnitt der Figur 9 vergrößert dargestellt.

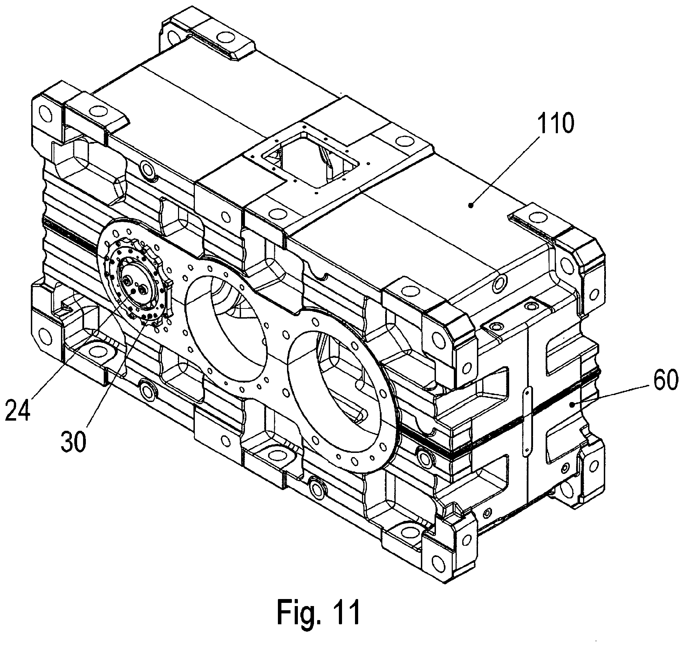

In der Figur 11 ist das Getriebe in Schrägansicht dargestellt, wobei im Unterschied zur Figur 9 das Oberteil 110 auf das Unterteil 60 aufgesetzt.

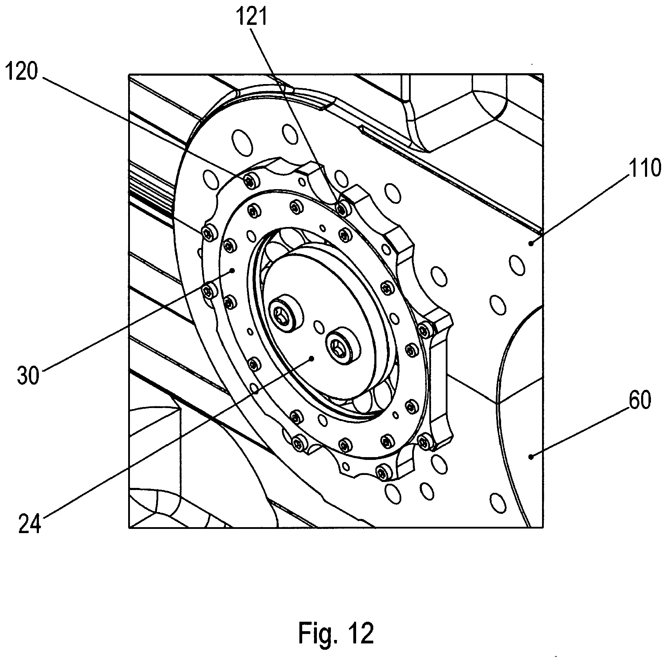

In der Figur 12 ist ein Ausschnitt der Figur 11 vergrößert dargestellt.

Wie in den Figuren dargestellt, wird ein Getriebe erfindungsgemäß durch Einsetzen einer vorkomplettierten Welleneinheit hergestellt, die vor dem Einsetzen ins Getriebegehäuse mit einer Lagerspannung ausgestattet wird und nach dem Einsetzen das Tragbild einer Kegelgetriebestufe eingestellt wird.

Im Folgenden werden die einzelnen Schritte näher erläutert:
Wie in Figur 1 dargestellt, wird auf eine Welle 1 ein drittes Lager 6 aufgesteckt, bis es an einer an der Welle 1 ausgebildeten Stufe anliegt. Auf seiner von dieser Stufe abgewandten Seite des dritten Lagers 6 wird dieses mit einem Sicherungsring axial gesichert, der in einer Ringnut der Welle 1 einschnappt.

Ein Rad 3, insbesondere Tellerrad der Kegelgetriebestufe des Getriebes, wird ebenfalls auf die Welle 1 aufgesteckt, bis es an einer Wellenschulter 2, insbesondere also einer zweiten Stufe, anliegt. Eine Distanzhülse 4 wird danach auf die Welle 1 aufgesteckt und liegt an dem Rad 3 an. Ein Ringteil 5 wird danach auf die Welle 1 aufgesteckt und liegt an einer weiteren Wellenschulter, insbesondere Stufe, an, wobei der Innendurchmesser des Ringteils 5 kleiner ist als der Innendurchmesser der Distanzhülse 4 und der vom Ringteil 5 überdeckte Radialabstandsbereich den von der Distanzhülse 4 überdeckten Radialabstandsbereich umfasst.

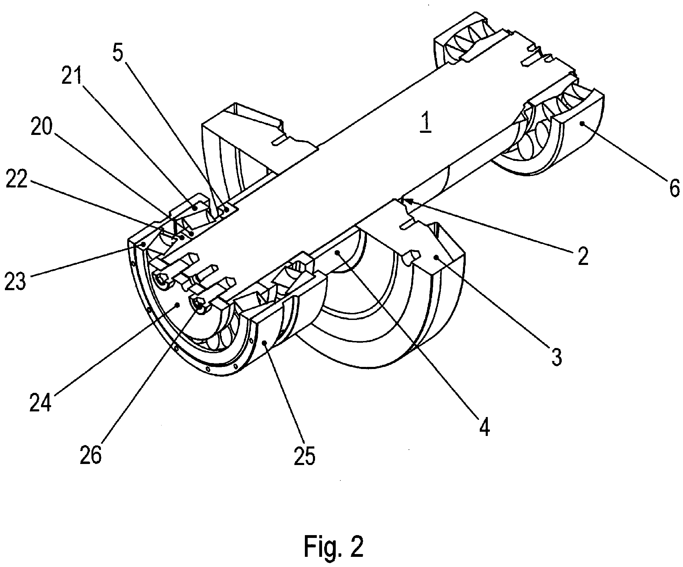

Wie in Figur 2 gezeigt, wird auf das Ringteil 5 folgend ein erstes und ein zweites Lager auf die Welle aufgesteckt. Dabei ist der Innenring 20 des ersten Lagers gegen das Ringteil 5 angestellt und der Innenring 22 des zweiten Lagers gegen den Innenring 20 des ersten Lagers.

Eine mit Schrauben 26 auf die Stirnseite der Welle 1 gedrückte Rundplatte 24 drückt auf den Innenring 22, der auf den Innenring 20 drückt, welcher gegen das Ringteil 5 angedrückt ist.

Die Schrauben 26 sind in axial gerichtete Gewindebohrungen in die Stirnseite der Welle 1 eingeschraubt, so dass die Schraubenköpfe der Schrauben 26 gegen die Rundplatte 24 drücken. Der Außenring 21 des ersten Lagers ist in einem Buchsenteil 25, insbesondere Hakenbuchse, aufgenommen. Ebenfalls ist auch der Außenring 23 des zweiten Lagers in diesem Buchsenteil 25 aufgenommen.

Das erste und das zweite Lager sind vorzugsweise als Schräglager ausgeführt, insbesondere in X-Anordnung.

Das Buchsenteil 25 weist an seinem ersten axialen Endbereich einen nach radial innen hervorragenden Ringbereich, insbesondere Vorsprung, auf, gegen welchen der Außenring 21 angestellt ist.

Das Buchsenteil 25 umgibt den Außenring 21 und den Außenring 23 radial und weist an seiner von dem Endbereich abgewandten Stirnseite in Umfangsrichtung voneinander regelmäßig beabstandete, axial gerichtete Gewindebohrungen auf.

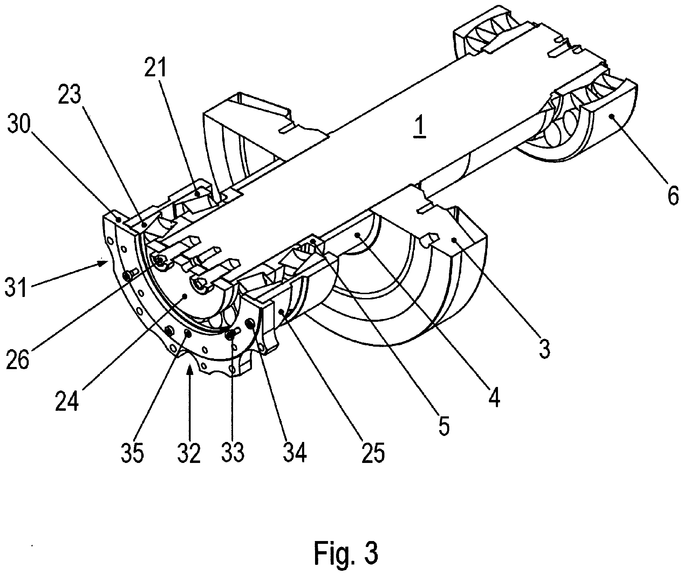

Wie in Figur 3 gezeigt, wird eine Basisringplatte 30 zur von dem Ringbereich, insbesondere Vorsprung, abgewandten Stirnseite des Buchsenteils 25 mittels Schrauben 34 hingedrückt, wobei die Schrauben in axial gerichtete Gewindebohrungen des Buchsenteils 25 eingeschraubt werden.

Um die Lagerspannung einzustellen werden aber eine oder mehrere Passscheiben zwischen dem Buchsenteil 25 und der Basisringplatte 30 eingelegt. Zur Bestimmung der von den Passscheiben aufzubringenden Wandstärke werden vor dem Einbringen der Passscheiben zunächst Einstellschrauben 33 eingeschraubt in durch die Basisringplatte 30 durchgehende Gewindebohrungen, bis diese Einstellschrauben zum Buchsenteil 25 hervorragen und auf das Buchsenteil 25 drücken und/oder bis die Einstellschrauben auf den Außenring 23 des zweiten Lagers drücken.

Durch Betätigen der Einstellschrauben 33 wird dieser Druck derart eingestellt, dass die gewünschte Lagerspannung erreicht wird. Während dieses Einstellvorgangs wird ein Maß für die Lagerspannung mit einem entsprechenden Mittel bestimmt. Beispielsweise wird hierzu ein Drehmoment beim Drehen der Welle 1 in einer Prüfvorrichtung bestimmt und die Einstellschrauben derart betätigt, dass der Wert des Drehmoments einen Sollwert erreicht.

Alternativ wird das Losbrechmoment der Welle 1 bestimmt und die Einstellschrauben derart betätigt, bis das Losbrechmoment einen Sollwert erreicht.

Weiter alternativ wird nur eine Bestimmung des Spiels der Basisringplatte 30 zum Buchsenteils 25 oder zum Außenring 23 über Push-Pull bestimmt und die Einstellschrauben 33 derart betätigt, bis das Losbrechmoment einen Sollwert erreicht ist.

Push-Pull ist beinhaltet hier die Überprüfung der Spielfreiheit bzw. der verbleibenden Axialluft durch Messung des Axialspiels durch Messtaster.

Weiter alternativ werden die Einstellschrauben derart betätigt, dass die Lagerspannung durch eine Sichtprüfung abschätzbar ist, indem sich alle Wälzkörper des ersten und zweiten Lagers drehen, wenn ein vorgegebenes Drehmoment auf die Welle aufgebracht wird.

Nachdem die Einstellschrauben 33 derart, insbesondere in einer der beispielhaft genannten Weisen, betätigt worden sind, dass die gewünschte Lagerspannung eingestellt wurde, wird durch ein durch die Basisringplatte 30 axial durchgehendes Loch 35 mittels Fühlerlehre oder mittels eines anderen Messmittels der axiale Abstand zwischen der Basisringplatte 30 und dem Außenring 23 ermittelt und/oder erfasst.

Danach werden die Einstellschrauben 33 entfernt und eine oder mehrere Passscheiben zwischen der Basisringplatte 30 und Außenring 23 eingebaut. Beim Anschrauben der Schrauben 34 drücken somit die Schraubenköpfe der Schrauben 34 auf die Basisringplatte 30, die somit über die Passscheiben auf den Außenring 23 drückt, der somit über die

Wälzkörper des zweiten Lagers den Innenring 22 auf den Innenring 21 drückt, der wiederum über die Wälzkörper des ersten Lagers den Außenring 21 des ersten Lagers gegen den Ringbereich des Buchsenteils 25 drückt. Mittels Das Buchsenteil 25 ist mittels der Schrauben 34 mit der Basisringplatte 30 verbunden.

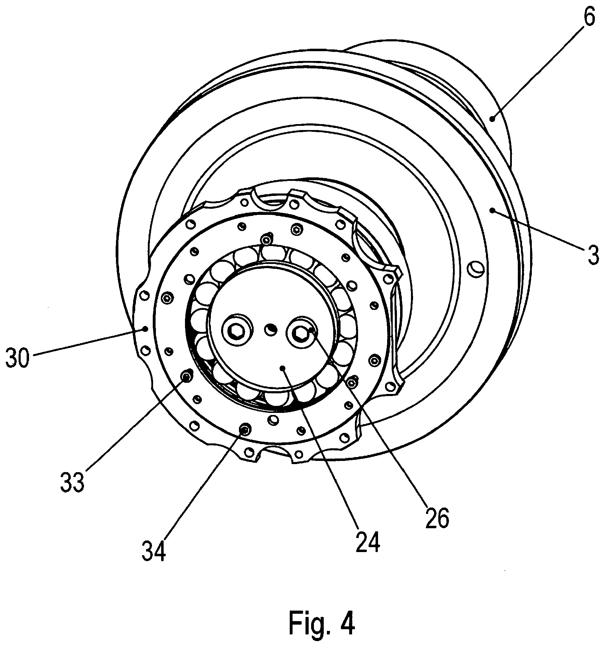

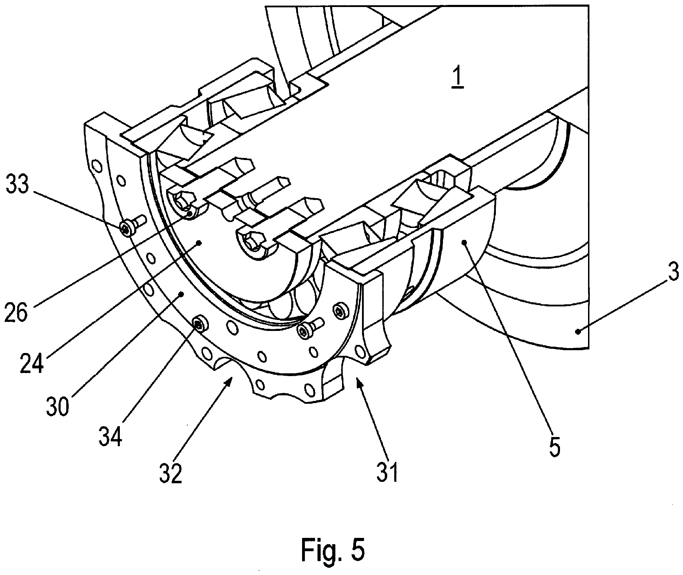

In Figur 4 und Figur 5 sind hierzu weitere Ansichten gezeigt. Dabei ist ersichtlich, dass die Basisringplatte 30 an ihrem radialen Außenumfang radial gerichtete Aussparungen 31 und 32, insbesondere Vertiefungen, aufweist. Die Funktion dieser Aussparungen 31 und 32 wird in den weiteren Figuren deutlich ersichtlich. Denn die Aussparung 32 schafft Freiraum für den Mündungsberiech eines Ölrohrs und die Aussparung 31 schafft Freiraum für die Betätigung von Schrauben.

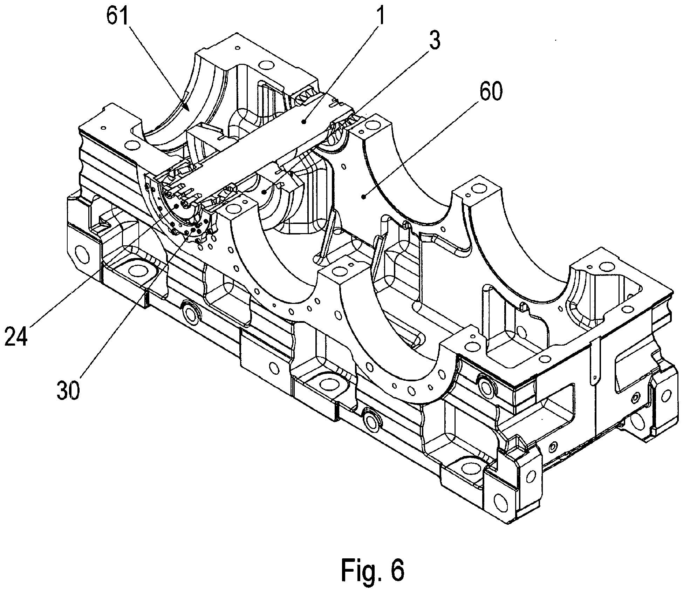

Nach Herstellung dieser vorkomplettierten Welleneinheit wird diese in das Unterteil 60 des Getriebegehäuses eingesetzt, wie in Figur 6 dargestellt.

Denn das Gehäuse des Getriebes weist ein Unterteil 60 auf und ein darauf aufsetzbares Oberteil 110.

Das Unterteil 60 weist halbkreisförmig bearbeitete Lageraufnahmen für das dritte Lager 6 und das erste sowie für das zweite Lager auf. In diese halbkreisförmigen Vertiefungen sind die Außenringe der jeweiligen Lager einsenkbar und somit aufnehmbar.

Wie in Figur 6 dargestellt, ist nach Aufnehmen der vorkomplettierten Welleneinheit das Rad 3 derart angeordnet, dass ein Kegelritzel, dessen Drehachse senkrecht zur Drehachse der Welle 1 ausgerichtet ist, mit der mit diesem Kegelritzel verbundenen eintreibenden Welle des Getriebes und dem darauf aufgesteckten weiteren Lager in einer weiteren halbkreisförmigen Vertiefung 61 aufnehmbar ist.

Somit ist die eintreibende Getriebestufe als Kegelgetriebestufe ausführbar.

Auf das Unterteil 70 ist das Oberteil 110 aufgesetzt und mit ihm verbunden.

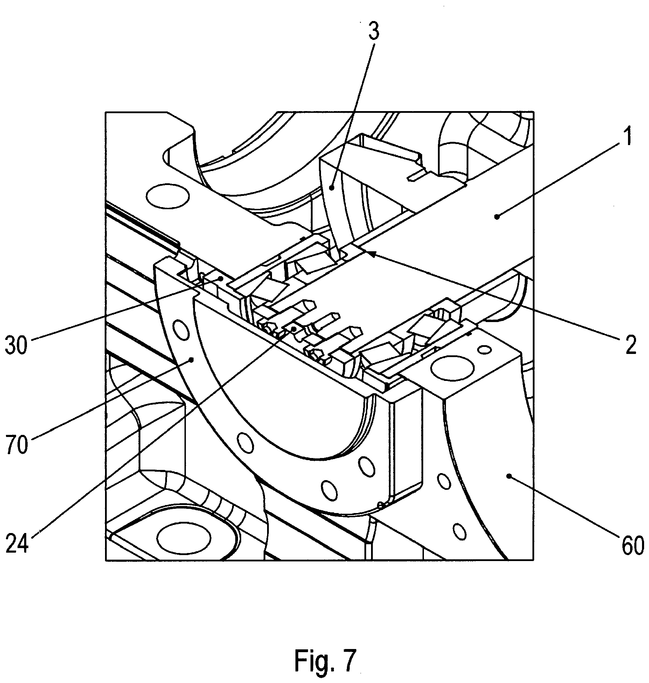

Wie in Figur 7 dargestellt, wird zur Abdeckung ein Lagerdeckel 70 am aus dem Unterteil 60 und dem damit verbundenen Oberteil 110 angeschraubt. Dieser überdeckt die Basisringplatte 30 und ist von der Basisringplatte 30 beabstandet. Auf diese Weise ist in dem Zwischenraum zwischen der Basisringplatte 30 und dem Lagerdeckel 70 ein Einströmen von Öl ermöglicht, das zur Schmierung des ersten und zweiten Lagers mit Öl beaufschlagbar ist. Dieses Öl dringt durch eine durch das Unterteil 60 durchgehende Bohrung aus dem im Unterteil 60 angeordneten Ölsumpf des Getriebes in den Zwischenraum ein. Der vom Lagerdeckel 70 überdeckte, wiederum auf die Drehachse der Welle 1 bezogene Radialabstandsbereich umfasst den von der Basisringplatte 30 überdeckten Radialabstandsbereich und auch den vom ersten und vom zweiten Lager überdeckten Radialabstandsbereich.

Der Lagerdeckel 70 ist mit dem Unterteil dicht verbunden, also mit einer zwischengeordneten Dichtung versehen. Ebenso ist die Dichtung zwischen dem Lagerdeckel 70 und dem Oberteil 110 angeordnet.

Zwischen der Basisringplatte 30 und dem Unterteil 60 sind zweite Passscheiben 80 angeordnet. Somit ist die axiale Position der gesamten vorkomplettierten Einheit mittels der Wandstärke der gewählten zweiten Passscheiben 80 einstellbar. Diese Wandstärke wird abhängig vom Tragbild des miteinander sich im Eingriff befindenden Verzahnungspaares bestimmt, welches aus dem Kegelritzel und dem Rad 3 besteht.

Vorzugsweise wird also eine Einfärbung des Eingriffsbereichs der Verzahnung eines der beiden Verzahnungspartners, also des Kegelritzels oder des Rads 3, ausgeführt und danach mit der eingestellten Beabstandung das Ritzel gedreht, so dass ein Tragbild bestimmbar ist. Durch möglichst gezielte Veränderung der Beabstandung ist das gewünschte Tragbild erhältlich und somit die notwendige Wandstärke der zweiten Passscheiben 80 bestimmt.

Die Veränderung ist entweder durch sukzessives Einlegen verschieden dicker zweiter Passscheiben 80 erreichbar oder wiederum durch den Einsatz von Einstellschrauben, welche in die Basisringplatte 30 eingeschraubt sind und sich am Unterteil 60 abstützen. Durch weitere, durch die Basisringplatte 30 durchgehenden Bohrungen hindurch ist mit einer Fühlerlehre der Abstand zwischen der Basisringplatte 30 und dem Unterteil 60 bestimmbar und somit die notwendige Wandstärke bestimmbar.

Die Basisringplatte 30 ist von Schraubenköpfen von Schrauben, die in axial gerichtete Gewindebohrungen des Unterteils eingeschraubt sind zum Unterteil hingedrückt, also über die zweiten Passscheiben 80 auf das Unterteil 60 angedrückt. Die axiale Richtung, der Radialabstand und die Umfangsrichtung beziehungsweise der Umfangswinkel bezieht sich hier immer auf die Drehachse der Welle 1.

Bei weiteren erfindungsgemäßen Ausführungsbeispielen wird statt der Passscheiben ein Mittel zur Fixierung des Abstandes verwendet. Diese werden hier der Einfachheit halber unter den Begriff der Passscheiben subsummiert.

### Bezugszeichenliste

1 Welle
2 Wellenschulter
3 Rad, insbesondere Tellerrad der Kegelgetriebestufe
4 Distanzhülse
5 Ringteil
6 Lager
20 Innenring
21 Außenring
22 Innenring
23 Außenring
24 Rundplatte
25 Buchsenteil, insbesondere Hakenbuchse
26 Schraube
30 Basisringplatte
31 Aussparung
32 Aussparung
33 Einstellschraube
34 Schraube
35 Bohrloch
36 Ölbohrung
60 Unterteil
61 weitere halbkreisförmige Vertiefung
70 Lagerdeckel
80 zweite Passscheibe
110 Oberteil
120 Schraube
121 Einstellschraube

## Patentansprüche

1. Getriebe mit einem Gehäuse und einer Welleneinheit,
wobei das Gehäuse ein Unterteil (60) und ein auf das Unterteil (60) aufgesetztes Oberteil (110) aufweist,
wobei das Unterteil (60) zumindest eine erste, insbesondere halbzylindrische, Aussparung, insbesondere Lageraufnahme, zur Aufnahme der Welleneinheit aufweist, wobei das Oberteil (110) zumindest eine zweite, insbesondere halbzylindrische, Aussparung, insbesondere Lageraufnahme, aufweist, die zusammen mit der ersten, insbesondere halbzylindrischen, Aussparung des Unterteils (60) eine vollständige und/oder zylindrische Lageraufnahme bildet,
**wobei** die Welleneinheit eine Welle (1) aufweist, auf welche ein erstes und ein zweites Lager (6) aufgesteckt sind, deren Außenringe (21, 23) gegeneinander verspannt sind, wobei die Welleneinheit eine oder mehrere erste Passscheiben zur Einstellung des Verspannens, insbesondere der Lagerspannung, aufweist,
wobei das Getriebe eine oder mehrere zweite Passscheiben (80) aufweist zur Einstellung der axialen Position der Welleneinheit,
wobei das Getriebe eine Basisringplatte (30) aufweist,
**dadurch gekennzeichnet, dass**
**die Basisringplatte (30) an ihrem äußeren Umfang radial gerichtete Aussparungen. (31, 32) aufweist,**
**wobei eine erste** (32) der radial gerichteten **Aussparungen (31, 32) die Mündung einer Ölbohrung** (36) **freigibt.**

2. **Getriebe nach Anspruch 1,**
**dadurch gekennzeichnet, dass**
**in dem von der Ölbohrung überdeckten Umfangswinkelbereich der von der Ölbohrung überdeckte Radialabstandsbereich radial beabstandet ist von dem von der Basisringplatte (30) überdeckten Radialabstandsbereich.**

3. Getriebe nach Anspruch **1 oder 2,**
**dadurch gekennzeichnet, dass**
die Welleneinheit ein Buchsenteil (25), insbesondere Hakenbuchse, aufweist, in welcher der Außenring (21) des ersten Lagers (6) und der Außenring (23) des zweiten Lagers aufgenommen ist,
insbesondere wobei einer der Außenring (21) des ersten Lagers (6) gegen einen an dem Buchsenteil (25) ausgeformten, nach radial innen hervorragenden Vorsprung angestellt ist.

4. Getriebe nach einem der vorangegangenen Ansprüche,
**dadurch gekennzeichnet, dass**
der Innenring (20) des ersten Lagers (6) und der Innenring (22) des zweiten Lagers auf die Welle (1) aufgesteckt sind,
wobei der Innenring (20) des ersten Lagers (6) gegen eine Wellenstufe der Welle (1) angestellt ist oder gegen einen an einer Wellenstufe der Welle (1) angestellten Ring angestellt ist.

5. Getriebe nach einem der vorangegangenen Ansprüche,
**dadurch gekennzeichnet, dass**
**an einer** Stirnseite der Welle (1) **eine** eingeschraubte Rundplatte (24) den Innenring (22) des zweiten Lagers axial begrenzt,
insbesondere wobei der Innenring (20) des ersten Lagers (6) axial direkt benachbart zum Innenring (22) des zweiten Lagers benachbart ist.

6. **Getriebe nach einem der Ansprüche 3 bis 5,**
**dadurch gekennzeichnet, dass**
die Basisringplatte (30) mittels Schrauben (26) auf das Buchsenteil (25) gedrückt gehalten ist, wobei die Schrauben (26) durch die Basisringplatte (30) hindurchragen und in axial gerichtete Gewindebohrungen des Buchsenteils (25) eingeschraubt sind.

7. Getriebe nach einem der vorangegangenen Ansprüche,
**dadurch gekennzeichnet, dass**
das erste Lager (6) als Schräglager ausgeführt ist und das zweite Lager als Schräglager ausgeführt ist.

8. **Getriebe nach einem der Ansprüche 6 bis 7,**
**dadurch gekennzeichnet, dass**
axial zwischen dem Außenring (23) des zweiten Lagers und der Basisringplatte (30) die erste oder die ersten Passscheiben angeordnet sind.

9. **Getriebe nach einem Anspruch 8,**
**dadurch gekennzeichnet, dass**
die Basisringplatte (30) axial durchgehende Gewindebohrungen für Einstellschrauben (33) aufweist, **welche so einstellbar sind, dass sie** auf den Außenring (23) des zweiten Lagers drücken
**oder dass**
die Basisringplatte (30) axial durchgehende Bohrungen für eine Fühlerlehre aufweist, insbesondere mit welcher der Abstand zwischen Basisringplatte (30) und Außenring (23) des zweiten Lagers bestimmbar ist.

10. **Getriebe nach einem der Ansprüche 5 bis 9, dadurch gekennzeichnet, dass** ein Rad (3), insbesondere Kegelrad oder planverzahntes Rad, auf die Welle (1) aufgesteckt und gegen eine Wellenschulter (2) oder gegen einen Sicherungsring angestellt ist,
wobei eine Distanzhülse (4) auf der von der Wellenschulter (2) axial abgewandten Seite von einem Ringteil (5) gegen das Rad (3) gedrückt ist,
insbesondere wobei die Basisringplatte (30) den Innenring (22) des zweiten Lagers zum Innenring (20) des ersten Lagers (6) hindrückt, der auf das Ringteil (5) gedrückt ist.

11. **Getriebe nach einem der Ansprüche 3 bis 10,**
**dadurch gekennzeichnet, dass**
auf der vom ersten und zweiten Lager (6) abgewandten Seite des Rads (3) ein drittes Lager auf die Welle (1) aufgesteckt ist,
insbesondere wobei das dritte Lager, insbesondere nämlich Loslager, den gleichen Außendurchmesser wie das Buchsenteil (25) aufweist, insbesondere zum Erreichen des symmetrischen Aufbaus des Gehäuses.

12. **Getriebe nach einem der Ansprüche 3 bis 11,**
**dadurch gekennzeichnet, dass**
in der ersten insbesondere halbzylindrischen Aussparung des Unterteils (60) das Buchsenteil (25) aufgenommen und/oder eingelegt ist
und/oder dass in einer weiteren insbesondere halbzylindrischen zur Aufnahme des Unterteils (60) das dritte Lager der Welle (1) aufgenommen und/oder eingelegt ist,
insbesondere wobei das dritte Lager, insbesondere nämlich Loslager, den gleichen Außendurchmesser wie das Buchsenteil (25) aufweist, insbesondere zum Erreichen des symmetrischen Aufbaus des Gehäuses.

13. **Getriebe nach einem der Ansprüche 6 bis 12,**
**dadurch gekennzeichnet, dass** die Basisringplatte (30) mittels durch die Basisringplatte (30) durchgehender, weiterer Schrauben zum Unterteil (60) hingedrückt ist,
wobei eine oder mehrere zweite Passscheiben (80) zwischen Basisringplatte (30) und Unterteil (60) angeordnet sind,
insbesondere wobei die Basisringplatte (30) axial durchgehende Gewindebohrungen aufweist, durch welche Einstellschrauben (33) hindurchragen, die auf dem Unterteil (60) abgestützt sind, und weitere axial durchgehende Bohrungen aufweist, durch welche der Abstand zwischen Basisringplatte (30) und Unterteil (60) mittels Fühlerlehre bestimmbar ist.

14. **Getriebe nach einem der Ansprüche 6 bis 13,**
**dadurch gekennzeichnet, dass**
ein Lagerdeckel (70) mittels Schrauben (26) mit dem Unterteil (60) dicht, insbesondere öldicht, verbunden ist, insbesondere zur Abdeckung der Basisringplatte (30),
wobei zwischen Basisring und Lagerdeckel (70) ein Freiraum ausgebildet ist, der zumindest teilweise mit Öl befüllt ist,
insbesondere wobei der vom Lagerdeckel (70) in axialer Richtung überdeckte Bereich den von der Basisringplatte (30) in axialer Richtung überdeckten Bereich umfasst und/oder wobei der vom Lagerdeckel (70) überdeckte Radialabstandsbereich den von der Basisringplatte (30) überdeckten Radialabstandsbereich umfasst.

15. Verfahren zum Herstellen eines Getriebes nach einem der vorangegangenen Ansprüche,
**dadurch gekennzeichnet, dass**
in einem ersten Verfahrensschritt eine vorkomplettierte Welleneinheit hergestellt wird, wobei auf eine Welle (1) ein erstes und ein zweites Lager (6) aufgesteckt werden und danach deren Außenringe (21, 23) mittels eines die Außenringe (21, 23) aufnehmenden Buchsenteils (25)
und einer Basisringplatte (30) gegeneinander verspannt werden unter Verwendung einer oder mehrerer erster Passscheiben zur Einstellung des Verspannens, insbesondere der Lagerspannung, wobei in einem auf den ersten Verfahrensschritt nachfolgenden zweiten Verfahrensschritt die Welleneinheit in ein Unterteil (60) des Gehäuses des Getriebes eingelegt wird **und** durch Einlegen einer oder mehrerer zweiter Passscheiben (80) zwischen der Basisringplatte (30) und dem Unterteil (60) die auf das Unterteil (60) bezogene relative axiale Position der Welleneinheit festgelegt wird,
insbesondere wobei die Bestimmung der axialen Position durch Beurteilung des Tragbildes eines aus einem mit der Welle (1) drehfest verbundenen Rad (3) und aus einem drehbar im Gehäuse gelagerten Ritzel, insbesondere Kegelritzel, des Getriebes gebildeten Verzahnungspaars erfolgt.

## Claims

1. A gear unit having a housing and a shaft unit,
wherein the housing has a lower part (60) and an upper part (110) placed onto the lower part (60),
wherein the lower part (60) has at least one first, in particular semicylindrical, cutout, in particular bearing receiver, to receive the shaft unit,
wherein the upper part (110) has at least one second, in particular semicylindrical, cutout, in particular bearing receiver, which together with the first, in particular semicylindrical, cutout of the lower part (60) forms a complete and/or cylindrical bearing receiver,
wherein the shaft unit has a shaft (1) onto which there are placed a first and a second bearing (6) whose outer rings (21, 23) are braced in relation to one another, wherein the shaft unit has one or a plurality of first shim rings for adjustment of the bracing, in particular the bearing tension,
wherein the gear unit has one or a plurality of second shim rings (80) for the adjustment of the axial position of the shaft unit,
wherein the gear unit has a base ring plate (30),
**characterised in that**
the base ring plate (30) has radially-directed cutouts (31, 32) at its outer circumference, wherein a first (32) of the radially-directed cutouts (31, 32) exposes the mouth of an oil bore (36).

2. A gear unit according to claim 1,
**characterised in that**
in the circumferential angular region covered by the oil bore, the radial distance region covered by the oil bore is radially spaced apart from the radial distance region covered by the base ring plate (30).

3. A gear unit according to claim 1 or 2,
**characterised in that**
the shaft unit has a bushing part (25), in particular hook bushing, in which the outer ring (21) of the first bearing (6) and the outer ring (23) of the second bearing are received, in particular wherein one of the outer rings (21) of the first bearing (6) is placed against a projection which is formed on the bushing part (25) and projects radially inwards.

4. A gear unit according to any one of the preceding claims,
**characterised in that**
the inner ring (20) of the first bearing (6) and the inner ring (22) of the second bearing are placed onto the shaft (1),
wherein the inner ring (20) of the first bearing (6) is placed against a shaft step of the shaft (1) or against a ring placed against a shaft step of the shaft (1).

5. A gear unit according to any one of the preceding claims,
**characterised in that**
a round plate (24) screwed into an end face of the shaft (1) limits axially the inner ring (22) of the second bearing,
in particular wherein the inner ring (20) of the first bearing (6) is directly adjacent axially to the inner ring (22) of the second bearing.

6. A gear unit according to any one of claims 3 to 5,
**characterised in that**
the base ring plate (30) is held pressed onto the bushing part (25) by means of screws (26),
wherein the screws (26) project through the base ring plate (30) and are screwed into axially-directed tapped bores of the bushing part (25).

7. A gear unit according to any one of the preceding claims,
**characterised in that**
the first bearing (6) is in the form of an angular contact bearing and the second bearing is in the form of an angular contact bearing.

8. A gear unit according to one of claims 6 to 7,
**characterised in that**
the first shim ring or the first shim rings is/are arranged axially between the outer ring (23) of the second bearing and the base ring plate (30).

9. A gear unit according to claim 8,
**characterised in that**
the base ring plate (30) has axially through-passing tapped bores for adjusting screws (33) which are adjustable such that they press onto the outer ring (23) of the second bearing
or **in that**
the base ring plate (30) has axially through-passing bores for a feeler gauge, in particular by means of which the distance between base ring plate (30) and outer ring (23) of the second bearing can be determined.

10. A gear unit according to any one of claims 5 to 9,
**characterised in that**
a wheel (3), in particular a bevel gear or face-geared wheel, is placed onto the shaft (1) and placed against a shaft shoulder (2) or against a securing ring,
wherein at that side axially remote from the shaft shoulder (2), a spacer sleeve (4) is pressed against the wheel (3) by a ring part (5),
in particular wherein the base ring plate (30) presses the inner ring (22) of the second bearing towards the inner ring (20) of the first bearing (6), which is pressed onto the ring part (5).

11. A gear unit according to any one of claims 3 to 10,
**characterised in that**
a third bearing is placed onto the shaft (1) at that side of the wheel (3) remote from the first and second bearing (6),
in particular wherein the third bearing, in particular namely movable bearing, has the same outer diameter as the bushing part (25), in particular to achieve the symmetrical design of the housing.

12. A gear unit according to any one of claims 3 to 11,
**characterised in that**
the bushing part (25) is received and/or inserted in the first, in particular semicylindrical, cutout of the lower part (60),
and/or **in that** the third bearing of the shaft (1) is received and/or inserted in a further, in particular semicylindrical, [cutout] for receiving the lower part (60),
in particular wherein the third bearing, in particular namely movable bearing, has the same outer diameter as the bushing part (25), in particular to achieve the symmetrical design of the housing.

13. A gear unit according to any one of claims 6 to 12,
**characterised in that**
the base ring plate (30) is pressed towards the lower part (60) by means of further screws passing through the base ring plate (30),
wherein one or a plurality of second shim rings (80) are arranged between base ring plate (30) and lower part (60),
in particular wherein the base ring plate (30) has axially through-passing tapped bores through which there project adjusting screws (33), supported on the lower part (60), and has further axially through-passing bores by which the distance between base ring plate (30) and lower plate (60) can be determined by means of a feeler gauge.

14. A gear unit according to any one of claims 6 to 13,
**characterised in that**
a bearing cover (70) is connected to the lower part (60) in an impervious manner, in particular impervious to oil, by means of screws (26), in particular for covering of the base ring plate (30),
wherein a free space is formed between base ring and bearing cover (70) and is at least partially filled with oil,
in particular wherein the region covered in an axial direction by the bearing cover (70) comprises the region covered in an axial direction by the base ring plate (30) and/or wherein the radial distance region covered by the bearing cover (70) comprises the radial distance region covered by the base ring plate (30).

15. A method of manufacturing a gear unit according to any one of the preceding claims, **characterised in that**
in a first method step there is manufactured a pre-assembled shaft unit, wherein a first and a second bearing (6) are placed onto a shaft (1) and thereafter their outer rings (21, 23) are braced with respect to one another by means of a bushing part (25) receiving the outer rings (21, 23) and by means of a base ring plate (30), using one or a plurality of first shim rings to adjust the bracing, in particular the bearing tension,
wherein in a second method step subsequent to the first method step, the shaft unit is inserted into a lower part (60) of the housing of the gear unit and the relative axial position of the shaft unit related to the lower part (60) is established by insertion of one or a plurality of second shim rings (80) between the base ring plate (30) and the lower part (60),
in particular wherein the determination of the axial position takes place by assessing the contact pattern of a gear pair formed of a wheel (3) connected to the shaft (1) in a rotationally-fixed manner and of a gear-unit pinion rotatably mounted in the housing, in particular bevel pinion.

## Revendications

1. Transmission comprenant un carter et une unité d'arbre,
le carter présentant une partie inférieure (60) et une partie supérieure (110) posée sur la partie inférieure (60),
la partie inférieure (60) présentant au moins un premier évidement, en particulier semi-cylindrique, en particulier un logement de palier, permettant d'accueillir l'unité d'arbre, la partie supérieure (110) présentant au moins un second évidement, en particulier semi-cylindrique, en particulier un logement de palier, qui forme avec le premier évidement, en particulier semi-cylindrique, de la partie inférieure (60) un logement de palier complet et/ou cylindrique,
l'unité d'arbre présentant un arbre (1) sur lequel sont enfichés des premier et second paliers (6) dont les bagues extérieures (21, 23) sont serrées l'une contre l'autre, l'unité d'arbre présentant une ou plusieurs première(s) rondelle(s) d'ajustement permettant de régler le serrage, en particulier la tension de palier,
la transmission présentant une ou plusieurs seconde(s) rondelle(s) d'ajustement (80) permettant de régler la position axiale de l'unité d'arbre,
la transmission présentant une plaque annulaire de base (30),
**caractérisée en ce que**
la plaque annulaire de base (30) présente sur sa périphérie extérieure des évidements (31, 32) orientés de manière radiale,
un premier (32) parmi les évidements (31, 32) orientés de manière radiale libérant l'entrée d'un trou d'huile (36).

2. Transmission selon la revendication 1,
**caractérisée en ce que**
dans la région angulaire périphérique couverte par le trou d'huile, la région d'espacement radial couverte par le trou d'huile est espacée radialement par rapport à la région d'espacement radial couverte par la plaque annulaire de base (30).

3. Transmission selon la revendication 1 ou 2,
**caractérisée en ce que**
l'unité d'arbre présente une partie manchon (25), en particulier un manchon à crochet au sein duquel sont accueillies la bague extérieure (21) du premier palier (6) et la bague extérieure (23) du second palier,
l'une des bagues extérieures (21) du premier palier (6) étant en particulier appliquée contre une saillie faisant saillie radialement vers l'intérieur et formée sur la partie manchon (25).

4. Transmission selon l'une quelconque des revendications précédentes,
**caractérisée en ce que**
la bague intérieure (20) du premier palier (6) et la bague intérieure (22) du second palier sont enfichées sur l'arbre (1),
la bague intérieure (20) du premier palier (6) étant appliquée contre un étage d'arbre de l'arbre (1) ou étant appliquée contre une bague appliquée contre un étage d'arbre de l'arbre (1).

5. Transmission selon l'une quelconque des revendications précédentes,
**caractérisée en ce que**
une plaque ronde (24) vissée délimite axialement la bague intérieure (22) du second palier au niveau d'une face frontale de l'arbre (1),
la bague intérieure (20) du premier palier (6) étant en particulier directement adjacente axialement à la bague intérieure (22) du second palier.

6. Transmission selon l'une quelconque des revendications 3 à 5,
**caractérisée en ce que**
la plaque annulaire de base (30) est maintenue pressée sur la partie manchon (25) au moyen de vis (26), les vis (26) traversant la plaque annulaire de base (30) et étant vissées dans des alésages filetés orientés axialement de la partie manchon (25).

7. Transmission selon l'une quelconque des revendications précédentes,
**caractérisée en ce que**
le premier palier (6) est réalisé sous la forme d'un palier à contact oblique et le second palier (7) est réalisé sous la forme d'un palier à contact oblique.

8. Transmission selon l'une quelconque des revendications 6 à 7,
**caractérisée en ce que**
la première ou les premières rondelle(s) d'ajustement est/sont agencées axialement entre la bague extérieure (23) du second palier et la plaque annulaire de base (30).

9. Transmission selon la revendication 8,
**caractérisée en ce que**
la plaque annulaire de base (30) présente des alésages filetés axialement traversants destinés aux vis de réglage (33) et réglables de manière à appuyer sur la bague extérieure (23) du second palier
ou **en ce que**
la plaque annulaire de base (30) présente des trous axialement traversants destinés à une jauge d'épaisseur, en particulier avec lequel l'espacement entre la plaque annulaire de base (30) et la bague extérieure (23) du second palier peut être déterm iné.

10. Transmission selon l'une quelconque des revendications 5 à 9, **caractérisée en ce que**
une roue (3), en particulier une roue conique ou une roue à denture plane, est enfichée sur l'arbre (1) et est appliquée contre un épaulement d'arbre (2) ou contre une bague de sécurité,
une douille d'écartement (4) étant pressée contre la roue (3) par une partie annulaire (5) sur le côté axialement opposé à l'épaulement d'arbre (2),
la plaque annulaire de base (30) poussant en particulier la bague intérieure (22) du second palier vers la bague intérieure (20) du premier palier (6) qui est pressée sur la partie annulaire (5).

11. Transmission selon l'une quelconque des revendications 3 à 10,
**caractérisée en ce que**
un troisième palier est enfiché sur l'arbre (1) sur le côté de la roue (3) opposé aux premier et second paliers (6),
le troisième palier, en particulier à savoir un palier flottant, présentant en particulier le même diamètre extérieur que la partie manchon (25), en particulier afin d'obtenir la structure symétrique du carter.

12. Transmission selon l'une quelconque des revendications 3 à 11,
**caractérisée en ce que**
la partie manchon (25) est accueillie et/ou insérée dans le premier évidement, en particulier semi-cylindrique, de la partie inférieure (60)
et/ou **en ce que** le troisième palier de l'arbre (1) est accueilli et/ou inséré dans un autre évidement, en particulier semi-cylindrique, de la partie inférieure (60),
le troisième palier, en particulier à savoir un palier flottant, présentant en particulier le même diamètre extérieur que la partie manchon (25), en particulier afin d'obtenir la structure symétrique du carter.

13. Transmission selon l'une quelconque des revendications 6 à 12,
**caractérisée en ce que** la plaque annulaire de base (30) est pressée vers la partie inférieure (60) au moyen de vis supplémentaires traversant la plaque annulaire de base (30),
une ou plusieurs seconde(s) rondelle(s) d'ajustement (80) étant agencée(s) entre la plaque annulaire de base (30) et la partie inférieure (60),
la plaque annulaire de base (30) présentant en particulier des alésages filetés axialement traversants à travers lesquels passent des vis de réglage (33) qui s'appuient sur la partie inférieure (60), et présentant des alésages filetés axialement traversants supplémentaires grâce auxquels l'espacement entre la plaque annulaire de base (30) et la partie inférieure (60) peut être déterminé au moyen d'une jauge d'épaisseur.

14. Transmission selon l'une quelconque des revendications 6 à 13,
**caractérisée en ce que**
un couvercle de palier (70) est relié de manière étanche, en particulier de manière étanche à l'huile, à la partie inférieure (60) au moyen de vis (26), en particulier afin de recouvrir la plaque annulaire de base (30),
un espace libre au moins partiellement rempli d'huile est formé entre la bague de base et le couvercle de palier (70),
la région couverte par le couvercle de palier (70) dans la direction axiale comprenant en particulier la région couverte par la plaque annulaire de base (30) dans la direction axiale et/ou la région d'espacement radial couverte par le couvercle de palier (70) comprenant la région d'espacement radial couverte par la plaque annulaire de base (30).

15. Procédé de fabrication d'une transmission selon l'une quelconque des revendications précédentes,
**caractérisé en ce que**
dans une première étape de procédé, une unité d'arbre pré-complète est fabriquée, des premier et second paliers (6) étant enfichés sur un arbre (1), puis leurs bagues extérieures (21, 23) étant serrées l'une contre l'autre au moyen d'une partie manchon (25) accueillant les bagues extérieures (21, 23) et d'une plaque annulaire de base (30) en utilisant une ou plusieurs première(s) rondelle(s) d'ajustement permettant de régler le serrage, en particulier la tension de palier, et l'unité d'arbre, dans une seconde étape de procédé succédant à la première étape, étant insérée dans une partie inférieure (60) du carter de la transmission et la position axiale relative de l'unité d'arbre par rapport à la partie inférieure (60) étant déterminée en insérant une ou plusieurs seconde(s) rondelle(s) d'ajustement (80) entre la plaque annulaire de base (30) et la partie inférieure (60),
la détermination de la position axiale s'effectuant en particulier grâce à une évaluation du modèle de contact d'une paire de dentures formée par une roue (3), reliée de manière solidaire en rotation à l'arbre (1), et par un pignon, en particulier un pignon conique de la transmission monté rotatif dans le carter.
